(19) Europäisches Patentamt
European Patent Office
Office européen des brevets

(11) **EP 3 447 962 A1**

(12) **EUROPEAN PATENT APPLICATION**

(43) Date of publication:
**27.02.2019 Bulletin 2019/09**

(51) Int Cl.:
*H04L 7/00* (2006.01)     *H04J 14/02* (2006.01)

(21) Application number: **17306084.9**

(22) Date of filing: **21.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **RENAUDIER, Jérémie
91620 Nozay (FR)**

• **RIOS MULLER, Rafael
91620 Nozay (FR)**

(74) Representative: **Croonenbroek, Thomas Jakob et
al
Innovincia
11, avenue des Tilleuls
74200 Thonon-les-Bains (FR)**

Remarks:
Amended claims in accordance with Rule 137(2)
EPC.

(54) **TIMING RECOVERY METHOD AND ASSOCIATED EQUIPMENT**

(57) The present invention refers to a timing recovery method for optical signal transmission based on wavelength division multiplexing between a transmitter (1) and a receiver (3) wherein a spectral bandwidth associated with a channel is divided in at least three spectral subbands (B1...B8, B'1...B'9), a subband being associated with a subcarrier, a digital to analog converter (7) of the transmitter (1) being fed by the subbands, which are digitally multiplexed in frequency to produce a digital multicarrier signal, for modulating a laser source (9) of the transmitter (1) and wherein the optical signal comprising the digital multicarrier signal is converted in an analog to digital converter (21) of the receiver (3), the subbands (B1...B8, B'1...B'9) being digitally separated and wherein the clock signal is recovered from a central subband (B4, B5, B'5) and is used for the timing recovery of the other subbands (B1...B3, B6...B8, B'1...B'4, B'6...B'9).

Fig.1

EP 3 447 962 A1

## Description

### BACKGROUND OF THE INVENTION

The present invention relates to the field of optical transmission networks.

In order to improve the capacity of the optical transmission networks, wavelength division multiplexing techniques have been developed wherein a plurality of signals are transmitted simultaneously using different frequency channels that are multiplexed in frequency.

In order to further improve the capacity of these networks, attempts are made to reduce the spectral width of each channel and to reduce the gap between the channels. One such technique is called pulse shaping wherein filters such as raised cosine filters are applied and a roll-off coefficient corresponding to the spectral width of the filter can be chosen. When the roll-off is close to zero, the spectral width is close to the symbol rate.

However, with such technique, a part of the signal corresponding to frequencies around F+/-R/2 with F being the carrier frequency and R being the symbol rate is filtered out which may prevent the timing recovery at destination. Indeed, the part of the signal corresponding to F+/-R/2 frequencies is used in some known timing recovery techniques to retrieve the clock signal and ensures a correct detection of the received signal.

One solution to overcome this problem is to transmit dedicated pilot tones but these pilot tones are transmitted instead of data so that such solution does not enable to improve the overall throughput of the connection which is the goal of the improvement of the spectral efficiency.

As a consequence, the spectral efficiency is limited because of the need of the edges of the frequency spectrum of a channel in order to enable timing recovery at destination.

It is therefore a goal of the present invention to provide a solution enabling an increase of the spectral efficiency using roll-off factor close to zero while enabling timing recovery at destination.

### SUMMARY OF THE INVENTION

It is therefore a goal of the present invention to provide a method enabling improving the spectral efficiency while enabling timing recovery at destination.

Thus, the invention refers to a timing recovery method for optical signal transmission based on wavelength division multiplexing between a transmitter and a receiver wherein a spectral bandwidth associated with a channel is divided in at least three spectral subbands, a subband being associated with a subcarrier, a digital to analog converter of the transmitter being fed by the subbands (also known as digital subcarriers), which are digitally multiplexed in frequency to produce a digital multicarrier signal , for modulating a laser source of the transmitter and wherein the optical signal comprising the digital multicarrier signal is converted in an analog to digital converter of the receiver, the subbands being digitally separated and wherein the clock signal is recovered from a central subband and is used for the timing recovery of the other subbands.

The digital division in subbands at the transmitter enables to apply a clock recovery at the receiver on one subband and to use the recovered clock for the timing recovery of the other subbands.

According to another aspect of the present invention, the clock signal is recovered based on the spectral content of the central subband using cyclo stationarity properties.

According to another aspect of the present invention, the clock signal is recovered by determining the time-variations of the phase given by a signal phase estimator.

According to another aspect of the present invention, the signal phase estimator is given by the following expression:

$$\theta = arg \sum_{k=-K}^{K} S\left(\frac{-R}{2} + \frac{kR}{N}\right) \cdot S\left(\frac{R}{2} + \frac{kR}{N}\right)$$

with K the number of subbands, R the symbol rate, N the number of samples of the signal and S the Fourier transform of N samples.

According to another aspect of the present invention, a raised cosine or root-raised cosine pulse shaping filter with a predetermined roll-off factor is applied on the subbands.

According to another aspect of the present invention, the value of the roll-off factor is different between the at least one central subband and the side subbands.

According to another aspect of the present invention, the value of the roll-off factor is larger for the central subband used for the timing recovery and smaller for the side subbands.

According to another aspect of the present invention, the clock mismatch of a first subband corresponds to the clock mismatch of a second subband multiplied by the ratio between the symbol rate of the second subband to the symbol rate of the first subband.

The present invention also refers to an optical transmission method comprising the following steps:

- dividing a digital signal in at least three spectral subbands, a subband being associated with a subcarrier,
- applying a root-raised cosine pulse shaping filter on each subband,
- combining the at least three spectral subbands via digital frequency multiplexing,
- converting the digital frequency multiplexed signal with a digital to analog converter,
- modulating an optical signal provided by a laser source with the converted signal,

- transmitting the modulated signal to a coherent receiver,
- detecting the transmitted signal using a photodetector,
- converting the detected signal with an analog to digital converter,
- separating the different subbands of the converted detected signal,
- recovering a clock signal from a central subband,
- determining timing recovery of the other subband based on the clock signal of the central subband.

According to another aspect of the present invention, the roll-off factor applied to the central subband is larger than the roll-off factor applied to the side subbands.

The present invention also refers to an optical network comprising:

- at least one transmitter comprising:

  - a laser source,
  - a digital to analog converter and,
  - a digital processing unit configured for dividing a spectral bandwidth associated with a channel in at least three spectral subbands, a subband being associated with a subcarrier, the digital to analog converter of the transmitter being fed by the subbands, which are digitally multiplexed in frequency, for modulating the laser source,

- at least one receiver comprising:

  - an analog to digital converter configured for converting the digital multiplexed signal,

- a digital processing unit configured for digitally separating the different subbands, for recovering the clock signal of a central subband and for using the recovered clock signal for the timing recovery of the other subbands.

## BRIEF DESCRIPTION OF THE DRAWINGS

FIG.1 is a diagram of an optical link between a transmitter of an ingress node N1 and a receiver of an egress node N2,
FIG.2 is diagram of a transmitter,
FIG.3 is a diagram of the different steps achieved by the digital processing unit of the transmitter according to the present invention,
FIG.4A and FIG.4B represent a first and a second example of division of a channel spectral bandwidth into a plurality of subbands according to the present invention,

FIG.5 is a diagram of a receiver,
FIG.6 is a diagram of the different steps achieved by the digital processing unit of the receiver according to the present invention.

## DETAILED DESCRIPTION OF THE INVENTION

The following achievements are examples. Although, the specification refers to one or several embodiments, it does not imply that each reference refers to the same embodiment or that the features apply only to a single embodiment. Simple features of different embodiments can also be combined to provide other embodiments.

As used hereafter, the term "subband" refers to a spectral band corresponding to a subdivision of a larger spectral band also called bandwidth.

As used hereafter, the term "central subband" refers to a subband which is located at the center of the bandwidth, depending on the division of the bandwidth, there can be a single or two central subbands.

As used hereafter, the term "side subband" refers to a subband which is not a central subband.

As used hereafter, the term "edge subband" refers to a suband which is located at an edge of the spectral bandwidth.

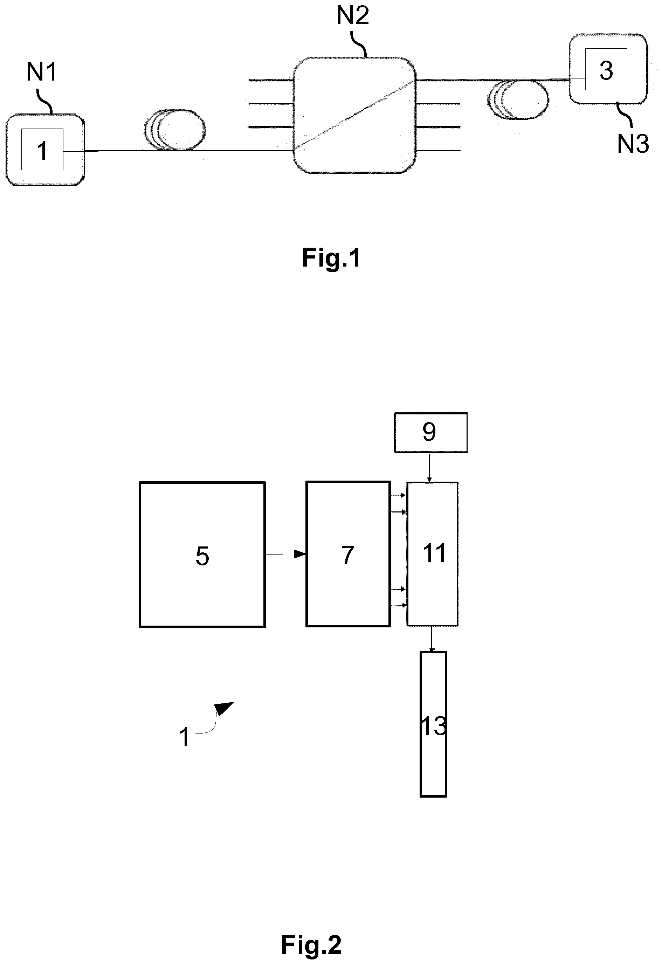

The present invention refers to a timing recovery method for optical signal transmission between a transmitter 1 and a receiver 3 as represented in Fig.1. The transmitter 1 is for example located in an ingress node N1 and the receiver 3 is for example located in an egress node N3 of a network. Intermediate nodes such as N2 may be located along the link N1-N3.

Fig.2 represents a diagram of a transmitter 1. The transmitter 1 comprises a digital processing unit 5, a digital to analog converter 7, an optical source 9 such as a laser source and a modulator 11 such as a Mach-Zehnder modulator, configured for modulating the optical signal provided by the optical source 9 according to the signal provided by the digital to analog converter 7. The output of the modulator 11 is coupled to an optical link 13 such as an optical fiber.

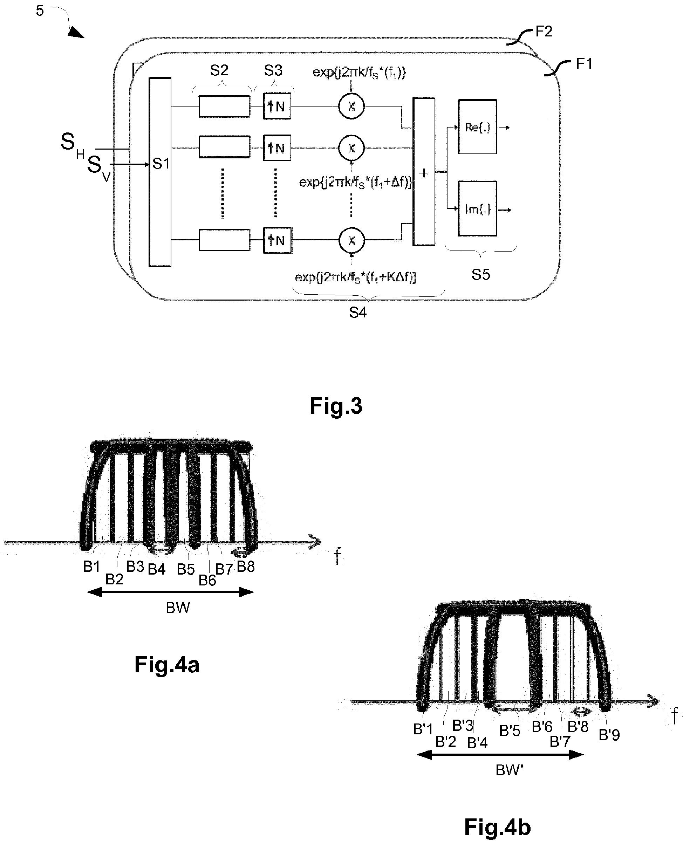

Fig.3 represents a diagram of the different steps achieved by the processing unit 5. The different symbols are distributed according to two different polarizations noted respectively $S_H$ and $S_V$ which are orthogonal polarizations and are processed in parallel as represented by the frames F1 and F2. The symbols (associated with a polarization) are divided in a plurality of subbands, for example K subbands, in a serial-to-parallel step S1. The number K of subbands is higher or equal to three.

Fig.4a represents a diagram of a channel spectral bandwidth BW divided into eight subbands noted B1, B2...B8, with two central subbands noted B4 and B5 and six side subbands noted B1, B2, B3, B6, B7 and B8, B1 and B8 being the edge subbands.

Fig.4b represents a diagram of a channel spectral bandwidth BW' divided into nine subbands noted B'1, B'2...B'9, with one central subband noted B'5 and six side subbands noted B'1... B'4, B'6... B'9, B'1 and B'9 being the edge subbands.

Referring again to fig.3, in a second step S2, pulse shaping filtering is applied on the symbols of each subband. The pulse shaping filtering refers for example to a root-raised cosine filter. The roll-off factors applied to the different subbands may be different from one subband to another. In particular, in order to maximize the spectral occupancy while ensuring a correct clock recovery, a higher roll-off factor, notably higher than 0.05 is applied to the central subband(s) (B4, B5 and B'5 in figs.4a and 4b) and smaller roll-off factors (close to zero) are applied to the side subbands and in particular to the edge subbands as the filters of the equipments crossed along the path N1-N3 may filtered out the edges of the channel bandwidth.

In a third step S3, the signals are upsampled to match with the sampling rate of the digital to analog converter 7.

In a fourth step S4, the signals are combined by frequency multiplexing. The digitally multiplexed signal is obtained by multiplying the symbols associated to the different subbands to the expression $exp(j2\pi k/f_s*(f_1+K\Delta f))$ the imaginary symbol, k an integer referring to a discrete time, fs the sampling frequency of the digital to analog converter, f1 the frequency of the first subcarrier, K the subband number and $\Delta f$ the frequency shift between two adjacent subbands and by summing the coefficients associated to each subband.

In a fifth step S5, the real part and the imaginary part of the digitally multiplexed signal are separated to produce the inphase and quadrature part of the signal. The real part and imaginary part obtained in step S5 are used to feed the digital to analog converter 7 presented in fig.2.

The real and imaginary parts of the signals corresponding to both modulations of frames F1 and F2 are then used for modulating the optical signal of the laser source 9. The modulated signal is then transmitted through the network to a receiver 3.

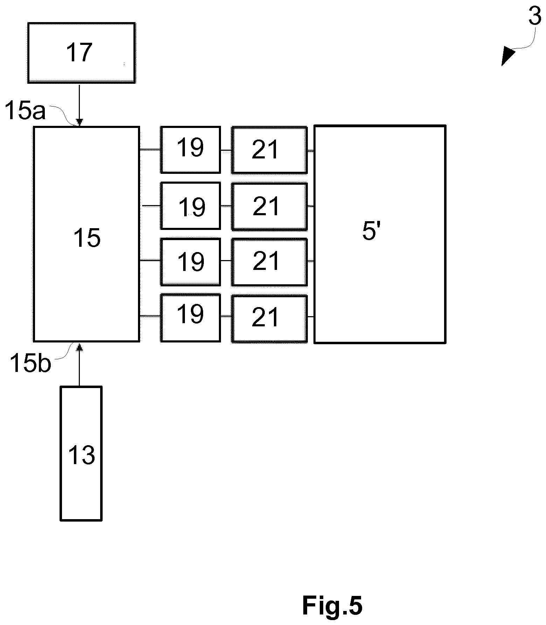

Fig.5 represents a diagram of a receiver 3. The receiver 3 comprises a coherent receiver 15 with a first input 15a linked to a local oscillator 17 such as a tunable laser source and a second input 15b linked to an optical link 13 such as an optical fiber wherein the optical signal is transmitted through the network. The coherent receiver 15 is configured for combining the received signal and the signal provided by the local oscillator 17 (which is tuned to the same frequency as the received signal) for enabling the detection of the transmitted signal. The receiver 3 also comprises a plurality of photodetectors 19, such as photodiodes, for detecting the different components of the received signal (real and imaginary part of the inphase and quadrature polarizations). A plurality of analog to digital converters 21 is coupled respectively to the plurality of photodetectors 19 for converting the different components of the signal (real and imaginary part of both polarizations). The different components are then transmitted to a digital processing unit 5'. As a node comprises generally a transmitter 1 and a receiver 3, the digital processing unit 5 and 5' may be implemented in a single processing unit module.

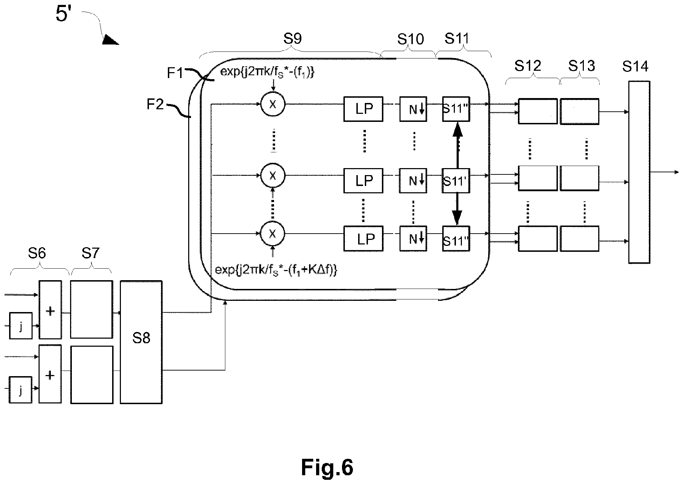

Fig.6 represents the different steps of the digital processing achieved by the digital processing unit 5' on the converted components.

The sixth step S6 refers to the complex symbols reconstruction wherein the real and imaginary parts of the signal provided by the analog to digital converters 21 are combined for both polarization corresponding to the frames F1 and F2.

The seventh step S7 refers to the chromatic dispersion compensation.

The eighth step S8 refers to the carrier frequency estimation wherein the frequency difference between the laser source 9 of the transmitter 1 and the local oscillator 17 of the receiver 3 is estimated and compensated.

The ninth step S9 refers to the separation of the different subbands. Such separation is achieved by multiplying the signal by the expression $exp((j2\pi k/f_s*-(f_1+K\Delta f)))$ and by applying a low pass filter LP to retrieve the signals associated to each subband.

The tenth step S10 refers to a downsampling. The downsampling is generally configured for obtaining a 2 samples per symbol rate but other rates (1,5 or 1,33 or 1,25 samples per symbol are also possible).

The eleventh step S11 refers to a timing recovery or clock recovery. This step comprises two substeps. A first substep S11' wherein the timing estimation or clock signal recovery is achieved on a central subband signal and a second substep S11" wherein the clock signal recovered from the central subband signal is used for the timing recovery of the other subbands.

Indeed, as the roll-off factor of the central subband(s) is higher than 0.05, timing estimation techniques of the state of the art can be applied efficiently. Such techniques are based on cyclo stationarity properties of the signal. In particular, the clock signal is recovered by determining the time-variations of the phase given by a signal phase estimator. The signal phase estimator refers for example to the following estimator:

$$\theta = arg \sum_{k=-K}^{K} S\left(\frac{-R}{2}+\frac{kR}{N}\right) \cdot \overline{S\left(\frac{R}{2}+\frac{kR}{N}\right)}$$

with K the number of subbands, R the symbol rate, N the number of samples of the signal block and S the Fourier transform of N samples. It has to be noted that such equation corresponds to a single polarization but generalized equations for dual-polarizations may also be used.

As all the subbands are processed and transmitted using the same optical source 9, the same digital to analog converter 7 of the transmitter 1 and the same analog to digital converters 21 of the receiver 3, the timing recovery of a central subband can be used for the other subbands (the clock signal will be the same if the central subband and the other subbands have the same symbol rate and have been generated by the same transmitter/digital to analog converter). In case of a side subband having a symbol rate different than the symbol rate of the central subband, the clock signal has to be corrected by multiplying by the ratio of the two symbol rates.

Thus, the clock signal recovered from a central subband can be used for the timing recovery of the other subbands, even the edge subbands for which a part of the spectrum corresponding to frequencies around F+/-R/2 with F being the carrier frequency and R being the symbol rate is filtered out.

The twelfth step S12 refers to a polarization demultiplexing. Such step can be achieved using a constant modulus algorithm (CMA).

The thirteenth step S13 refers to a carrier phase estimation.

The fourteenth step S14 refers to the multiplexing of the symbols of the different subbands in a parallel to serial process to recover the original symbol sequence.

The functions of the various elements shown in the figures, including any functional blocks labeled as "processors" or "processing units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

Thus, it is possible to obtain a reliable timing recovery combined with an optimized spectral occupancy by using a digital signal processing comprising a division of a channel spectral bandwidth into at least three subbands and the application of a pulse shaping filter configured for providing a larger roll-off factor to the central subband(s) and the use of the timing recovery achieved on the central subband for the timing recovery of the other subbands. Indeed, such technique enables applying small roll-off factors to the side subbands so that the spectral bandwidth may be close to the symbol rate. Furthermore, such technique refers to a digital processing signal technique and requires therefore no additional hardware equipment and can therefore be implemented easily on existing optical networks.

**Claims**

1. Timing recovery method for optical signal transmission based on wavelength division multiplexing between a transmitter (1) and a receiver (3) wherein a spectral bandwidth associated with a channel is divided in at least three spectral subbands (B1...B8, B'1...B'9), a subband (B1...B8, B'1...B'9) being associated with a subcarrier, a digital to analog converter (7) of the transmitter (1) being fed by the subbands, which are digitally multiplexed in frequency to produce a digital multicarrier signal, for modulating a laser source (9) of the transmitter (1) and wherein the optical signal comprising the digital multicarrier signal is converted in an analog to digital converter (21) of the receiver (3), the subbands (B1...B8, B'1...B'9) being digitally separated and wherein the clock signal is recovered from a central subband (B4, B5, B'5) and is used for the timing recovery of the other subbands (B1...B3, B6...B8, B'1...B'4, B'6...B'9).

2. Timing recovery method in accordance with claim 1 wherein the clock signal is recovered based on the spectral content of the central subband (B4, B5, B'5) using cyclo stationarity properties.

3. Timing recovery method in accordance with claim 2 wherein the clock signal is recovered by determining the time-variations of the phase given by a signal phase estimator.

4. Timing recovery method in accordance with claim 3 wherein the signal phase estimator is given by the following expression:

$$\theta = arg \sum_{k=-K}^{K} S\left(\frac{-R}{2}+\frac{kR}{N}\right) \cdot S\left(\frac{R}{2}+\frac{kR}{N}\right)$$

with K the number of subbands, R the symbol rate, N the number of samples of the signal and S the Fourier transform of N samples.

5. Timing recovery method in accordance with one of the previous claims wherein a raised cosine or root-raised cosine pulse shaping filter with a predetermined roll-off factor is applied on the subbands.

6. Timing recovery method in accordance with claim 5 wherein the value of the roll-off factor is different between the at least one central subband (B4, B5, B'5) and the side subbands (B1...B3, B6...B8, B'1...B'4, B'6...B'9).

7. Timing recovery method in accordance with claim 6 wherein the value of the roll-off factor is larger for the central subband (B4, B5, B'5) used for the timing recovery and smaller for the side subbands (B1...B3, B6...B8, B'1...B'4, B'6...B'9).

8. Timing recovery method in accordance with one of the previous claims wherein the clock mismatch of a first subband corresponds to the clock mismatch of a second subband multiplied by the ratio between the symbol rate of the second subband to the symbol rate of the first subband.

9. Optical transmission method comprising the following steps:

    - dividing a digital signal in at least three spectral subbands, a subband being associated with a subcarrier,
    - applying a root-raised cosine pulse shaping filter on each subband,
    - combining the at least three spectral subbands via digital frequency multiplexing,
    - converting the digital frequency multiplexed signal with a digital to analog converter,
    - modulating an optical signal provided by a laser source with the converted signal,
    - transmitting the modulated signal to a coherent receiver,
    - detecting the transmitted signal using a photodetector,
    - converting the detected signal with an analog to digital converter,
    - separating the different subbands of the converted detected signal,
    - recovering a clock signal from a central subband,
    - determining timing recovery of the other subband based on the clock signal of the central subband.

10. Optical transmission method in accordance with claim 9 wherein the roll-off factor applied to the central subband (B4, B5, B'5) is larger than the roll-off factor applied to the side subbands (B1...B3, B6...B8, B'1...B'4, B'6...B'9).

11. Optical network comprising:

    - at least one transmitter (1) comprising:

        - a laser source (9),
        - a digital to analog converter (7) and,

        - a digital processing unit (5) configured for dividing a spectral bandwidth associated with a channel in at least three spectral subbands (B1...B8, B'1...B'9), a subband (B1...B8, B'1...B'9) being associated with a subcarrier, the digital to analog converter (7) of the transmitter (1) being fed by the subbands (B1...B8, B'1...B'9), which are digitally multiplexed in frequency, for modulating the laser source,

    - at least one receiver (3) comprising:

        - an analog to digital converter (21) configured for converting the digital multiplexed signal,
        - a digital processing unit (5') configured for digitally separating the different subbands (B1...B8, B'1...B'9), for recovering the clock signal of a central subband (B4, B5, B'5) and for using the recovered clock signal for the timing recovery of the other subbands (B1...B3, B6...B8, B'1...B'4, B'6...B'9).

**Amended claims in accordance with Rule 137(2) EPC.**

1. Timing recovery method for optical signal transmission based on wavelength division multiplexing between a transmitter (1) and a receiver (3) wherein a spectral bandwidth associated with a channel is divided in at least three spectral subbands (B1...B8, B'1...B'9), a subband (B1...B8, B'1...B'9) being associated with a subcarrier, a digital to analog converter (7) of the transmitter (1) being fed by the subbands, which are digitally multiplexed in frequency to produce a digital multicarrier signal, for modulating a laser source (9) of the transmitter (1) and wherein the optical signal comprising the digital multicarrier signal is converted in an analog to digital converter (21) of the receiver (3), the subbands (B1...B8, B'1...B'9) being digitally separated and wherein the clock signal is recovered from a central subband (B4, B5, B'5) and is used for the timing recovery of the other subbands (B1...B3, B6...B8, B'1...B'4, B'6...B'9), the clock signal being recovered based on the spectral content of the central subband (B4, B5, B'5) using cyclo stationarity properties.

2. Timing recovery method in accordance with claim 1 wherein the clock signal is recovered by determining the time-variations of the phase given by a signal phase estimator.

3. Timing recovery method in accordance with claim 2 wherein the signal phase estimator is given by the following expression:

$$\theta = arg \sum_{k=-K}^{K} S\left(\frac{-R}{2} + \frac{kR}{N}\right) \cdot S\left(\frac{R}{2} + \frac{kR}{N}\right)$$

with K the number of subbands, R the symbol rate, N the number of samples of the signal and S the Fourier transform of N samples.

**4.** Timing recovery method in accordance with one of the previous claims wherein a raised cosine or root-raised cosine pulse shaping filter with a predetermined roll-off factor is applied on the subbands.

**5.** Timing recovery method in accordance with claim 4 wherein the value of the roll-off factor is different between the at least one central subband (B4, B5, B'5) and the side subbands (B1...B3, B6...B8, B'1...B'4, B'6...B'9).

**6.** Timing recovery method in accordance with claim 5 wherein the value of the roll-off factor is larger for the central subband (B4, B5, B'5) used for the timing recovery and smaller for the side subbands (B1...B3, B6...B8, B'1...B'4, B'6...B'9).

**7.** Timing recovery method in accordance with one of the previous claims wherein the clock mismatch of a first subband corresponds to the clock mismatch of a second subband multiplied by the ratio between the symbol rate of the second subband to the symbol rate of the first subband.

**8.** Optical transmission method comprising the following steps:

- dividing a digital signal in at least three spectral subbands, a subband being associated with a subcarrier,
- applying a root-raised cosine pulse shaping filter on each subband,
- combining the at least three spectral subbands via digital frequency multiplexing,
- converting the digital frequency multiplexed signal with a digital to analog converter,
- modulating an optical signal provided by a laser source with the converted signal,
- transmitting the modulated signal to a coherent receiver,
- detecting the transmitted signal using a photodetector,
- converting the detected signal with an analog to digital converter,
- separating the different subbands of the converted detected signal,
- recovering a clock signal from a central subband,

- determining timing recovery of the other subband based on the clock signal of the central subband.

**9.** Optical transmission method in accordance with claim 8 wherein the roll-off factor applied to the central subband (B4, B5, B'5) is larger than the roll-off factor applied to the side subbands (B1...B3, B6...B8, B'1...B'4, B'6...B'9).

**10.** Optical network comprising:

- at least one transmitter (1) comprising:

- a laser source (9),
- a digital to analog converter (7) and,
- a digital processing unit (5) configured for dividing a spectral bandwidth associated with a channel in at least three spectral subbands (B1...B8, B'1...B'9), a subband (B1...B8, B'1...B'9) being associated with a subcarrier, the digital to analog converter (7) of the transmitter (1) being fed by the subbands (B1...B8, B'1...B'9), which are digitally multiplexed in frequency, for modulating the laser source,

- at least one receiver (3) comprising:

- an analog to digital converter (21) configured for converting the digital multiplexed signal,
- a digital processing unit (5') configured for digitally separating the different subbands (B1...B8, B'1...B'9), for recovering the clock signal of a central subband (B4, B5, B'5) based on the spectral content of the central subband (B4, B5, B'5) using cyclo stationarity properties and for using the recovered clock signal for the timing recovery of the other subbands (B1...B3, B6...B8, B'1...B'4, B'6...B'9).

N2

N1

1

3

N3

**Fig.1**

9

5

7

11

1

13

**Fig.2**

**Fig.3**

**Fig.4a**

**Fig.4b**

**Fig.5**

**Fig.6**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 2 073 474 A1 (ALCATEL LUCENT [FR]) 24 June 2009 (2009-06-24)<br>* paragraph [0001] - paragraph [0010] *<br>* paragraph [0012] - paragraph [0027] *<br>* paragraph [0031] *<br>----- | 1-3,5-7, 9-11<br>4,8 | INV.<br>H04L7/00<br>H04J14/02 |
| A | US 2014/092924 A1 (KRAUSE DAVID JAMES [CA] ET AL) 3 April 2014 (2014-04-03)<br>* paragraph [0005] - paragraph [0008] *<br>* paragraph [0023] - paragraph [0030]; figures 1,2 *<br>* paragraph [0040] - paragraph [0047]; figure 3A *<br>* paragraph [0059] - paragraph [0078]; figures 5,6A,6B *<br>* paragraph [0085] - paragraph [0094]; figure 8 *<br>* paragraph [0104] - paragraph [0113]; figure 10 *<br>* paragraph [0054] *<br>----- | 1-11 | |
| A | ZHU MING ET AL: "Low-Latency Synchronous Clock Distribution and Recovery for DWDM-OFDMA-Based Optical Mobile Backhaul", JOURNAL OF LIGHTWAVE TECHNOLOGY, IEEE SERVICE CENTER, NEW YORK, NY, US, vol. 32, no. 10, 1 May 2014 (2014-05-01), pages 2012-2018, XP011547758, ISSN: 0733-8724, DOI: 10.1109/JLT.2014.2317651 [retrieved on 2014-05-09]<br>* page 2013, left-hand column, paragraph 4 - right-hand column, paragraph 1 *<br>* page 2014, left-hand column, paragraph 3 - page 2016, left-hand column, paragraph 1; figures 1,2,3 *<br>----- | 1-11 | TECHNICAL FIELDS SEARCHED (IPC)<br><br>H04L<br>H04J |

The present search report has been drawn up for all claims

| Place of search | Date of completion of the search | Examiner |
|---|---|---|
| The Hague | 9 February 2018 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 30 6084

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2018

| Patent document cited in search report | | Publication date | Patent family member(s) | Publication date |
|---|---|---|---|---|
| EP 2073474 | A1 | 24-06-2009 | NONE | |
| US 2014092924 | A1 | 03-04-2014 | NONE | |

EPO FORM P0459

For more details about this annex : see Official Journal of the European Patent Office, No. 12/82